(19) Europäisches Patentamt
European Patent Office
Office européen des brevets

(11) **EP 3 849 072 B1**

(12) **EUROPEAN PATENT SPECIFICATION**

(45) Date of publication and mention
of the grant of the patent:
**20.03.2024  Bulletin 2024/12**

(21) Application number: **19857156.4**

(22) Date of filing: **22.03.2019**

(51) International Patent Classification (IPC):
*H02M 7/12* (2006.01)    *B60L 1/00* (2006.01)
*B60L 9/26* (2006.01)    *H02M 1/32* (2007.01)
*H02M 7/219* (2006.01)    *H02M 5/458* (2006.01)
*H02M 7/487* (2007.01)    *B60L 3/00* (2019.01)
*B60L 9/28* (2006.01)    *H02M 1/00* (2006.01)

(52) Cooperative Patent Classification (CPC):
**H02M 7/219; B60L 1/00; B60L 3/003; B60L 9/26;**
**B60L 9/28; H02M 1/0048; H02M 5/4585;**
**H02M 7/487;** B60L 2200/26; B60L 2210/20;
H02M 1/32; H02M 7/2195; Y02T 10/72

(86) International application number:
**PCT/JP2019/012271**

(87) International publication number:
**WO 2020/049782 (12.03.2020 Gazette 2020/11)**

(54) **POWER CONVERSION DEVICE AND POWER CONVERSION METHOD**

LEISTUNGSUMWANDLUNGSVORRICHTUNG UND LEISTUNGSUMWANDLUNGSVERFAHREN

DISPOSITIF DE CONVERSION DE PUISSANCE ET PROCÉDÉ DE CONVERSION DE PUISSANCE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **04.09.2018   JP 2018165525**

(43) Date of publication of application:
**14.07.2021   Bulletin 2021/28**

(73) Proprietor: **Hitachi, Ltd.**
**Tokyo 100-8280 (JP)**

(72) Inventor: **KOUNO, Yasuhiko**
**Tokyo 100-8280, (JP)**

(74) Representative: **Mewburn Ellis LLP**
**Aurora Building**
**Counterslip**
**Bristol BS1 6BX (GB)**

(56) References cited:
JP-A- 2006 067 638      JP-A- 2014 064 398
JP-A- 2015 192 515      JP-A- 2018 007 326
US-A1- 2013 063 067     US-A1- 2018 123 474

• Wikipedia: "Active rectification - Wikipedia", , 1
June 2018 (2018-06-01), XP055909717, Retrieved
from the Internet:
URL:https://en.wikipedia.org/w/index.php?t
itle=Active_rectification&oldid=843913505
[retrieved on 2022-04-06]

## Description

Technical Field

The present invention relates to a power conversion device and a power conversion method.

Background Art

In a railway vehicle drive system, a power conversion device converts electric power taken from overhead contact lines to electric power suitable for driving a motor and supplies such power to the motor to get propulsive force. Electric power that is taken from overhead contact lines is broadly divided into alternating-current (AC) power and direct-current (DC) power.

For example, AC power taken from overhead contact lines via pantographs is supplied to a converter. The converter converts the AC power input thereto to DC power by switching of converter IGBTs (Insulated Gate Bipolar Transistors which are simply referred to as IGBTs hereinafter) in an appropriate order, the IGBTs being serially driven by gate drivers that are actuated by a command from a host controller, and a DC smoothing capacitor located at an output side of the converter is charged with the DC power. At this time, an output voltage of a traction transformer is increased by inductance of the traction transformer and the switching operation of the converter and a voltage across the DC smoothing capacitor (this voltage is hereinafter referred to as a DC stage voltage) becomes higher than the output voltage of the traction transformer.

An inverter converts the DC power supplied to this DC stage to three-phase AC power by switching of inverter IGBTs in an appropriate order, the IGBTs being serially driven by gate drivers that are actuated by a command from the host controller, and the motor is driven by the three-phase AC power.

Besides, as for auxiliary power supply equipment that supplies electric power to interior illumination, air-conditioners, etc. inside railway vehicles (such equipment is hereinafter referred to as an APS (Auxiliary Power Supply System) and is also called an SIV (Static InVerter)), the APS prevailing in Japanese railway vehicles is configured such that AC power supplied from a secondary winding of the traction transformer, provided separately from its primary winding, after being rectified by a rectification circuit, is converted to optional three-phase AC by an inverter for auxiliary power supply and the three-phase AC is supplied to a load such as the above-mentioned air-conditioners.

Meanwhile, in countries outside Japan, in order to reduce the APS size, power conversion devices for railway vehicles adopting a manner in which the APS is supplied with electric power from the DC stage after rectification by the converter are available as products. According to this manner, the converter in a power conversion device for railway vehicles can be used as a rectification circuit for APS and, therefore, the rectification circuit for APS is dispensed with; this is advantageous in enabling APS size reduction. This manner is hereinafter referred to as the APS supplied with DC power.

By the way, in recent years, with the aim of making a power conversion device even smaller and more efficient, SiC-MOSFETs (Metal-Oxide-Semiconductor Field-Effect Transistors) that are low loss have begun to be applied instead of IGBTs. Silicon Carbide SiC has a wider band gap than silicon and its dielectric strength voltage is about 10 times as much as silicon; therefore, thickness of SiC semiconductor chips can be decreased by about one tenth. Accordingly, this reduces SiC-MOSFET resistance when conducting current by about one tenth and conduction loss can be reduced.

Besides, because SiC-MOSFET chip resistance can be reduced as above, SiC-MOSFETs do not need to have a bipolar device structure in which charge is stored inside a device to decrease resistance to conduction as in IGBTs even when such elements are used that are resistant to high voltage, e.g., 3.3 kV, as a rated voltage for railway vehicles among others and can be configured to have a unipolar device structure like MOSFETs and JFETs (Function Field Effect Transistors). In comparison with bipolar devices, unipolar devices have reduced switching loss because they store no charge and can contribute to further energy saving of an inverter system.

Furthermore, unlike the IGBTs, because the SiC-MOSFETs allow current to flow in a reverse direction by turning their gates on, the SiC-MOSFETs dispense with antiparallel diodes (free wheel diodes) that are required for circulation of current in the IGBTs and this makes it possible to further downsize a power conversion device (refer to, e.g., Patent Literature 1).

Patent Literature 2 suggests a railway vehicle having an AC/DC power conversion device.
Patent Literature 3 suggests an AC/DC power conversion device.
Patent Literature 4 suggests an AC/DC power conversion device.

Citation List

Patent Literature

Patent Literature 1: Japanese Patent Application Laid-Open No. 2011-036020
Patent Literature 2: US Patent Application Laid-Open No. 2013/063067
Patent Literature 3: US Patent Application Laid-Open No. 2018/123474
Patent Literature 4: Japanese Patent Application Laid-Open No. 2014-064398

## Summary of Invention

### Technical Problem

However, a problem described below was posed in a case where the APS supplied with DC power was combined with a power conversion device in which a drive system applied SiC-MOSFETs.

In fact, when the vehicles are stopped at a station, the converter in the power conversion device may be deactivated if needed as long as the APS operates properly. Generally, when the vehicles are stopped at a station, because the inverter to drive the motor is inactive, the converter to supply electric power to the inverter is also deactivated.

Meanwhile, in the case of employing the APS supplied with DC power, even when the vehicles are stopped at a station, the converter has to be in operation to supply electric power to the APS. Nevertheless, when the converter continues to operate during the stop at a station, electromagnetic sound of the converter produced by switching in the converter and magnetostrictive sound of the transformer caused by a harmonic voltage that is generated by the switching may give a sense of discomfort to passengers who are on the platform of the station.

For this reason, there is an operation mode in which the converter is deactivated and electric power is supplied without producing noise by using free wheel diodes that are connected in inverse-parallel with switching elements in the converter as a rectification circuit. In the case of the converter using conventional IGBTs, the free wheel diodes connected in inverse-parallel with the IGBTs perform this rectification operation. However, because the converter that applied SiC-MOSFETs has no connection of free wheel diodes, stop of switching causes current to flow through parasitic diodes inside the SiC-MOSFETs; this posed a problem of deteriorating the SiC-MOSFETs.

The present invention has been developed, taking the foregoing into consideration, and is intended to prevent deterioration of the SiC-MOSFETs occurring when electric power is supplied to the APS in an inactive state of the converter that applied SiC-MOSFETs in railway vehicles.

### Solution to Problem

In order to solve the problem noted above and in accordance with the present invention, a power conversion device is provided as set forth in claim 1.

### Advantageous Effects of Invention

According to the present invention, it is possible to prevent deterioration of the SiC-MOSFETs occurring when electric power is supplied to the APS in an inactive state of the converter that applied SiC-MOSFETs in railway vehicles.

## Brief Description of Drawings

Figure 1 is a diagram depicting an example of a configuration of a power conversion device of Example 1 of embodiment.
Figure 2 is a timing chart representing a relationship between changing of an output voltage Es and a DC stage voltage Ecf and gate pulses in Example 1.
Figure 3 is a diagram depicting an example of a configuration of a power conversion device of Example 2 of embodiment.
Figure 4 is a diagram depicting an example of a configuration of a power conversion device of first prior art.
Figure 5 is a diagram depicting an example of a configuration of a power conversion device of second prior art.

## Description of Embodiments

Examples of embodiment of the present invention will be detailed below based on the drawings. In the respective drawings to explain prior art and examples of embodiment below, identical reference numerals denote components provided with identical or similar functions and repeated description of such components is omitted. Besides, a subset or all of the respective examples of embodiment and their modifications may be combined within the scope of the technical concept of the present invention and the scope conforming to the concept. In the examples of embodiment below, railway vehicles and vehicles are electric rolling stocks.

Before description of examples of embodiment of the present invention, descriptions on prior art are provided.

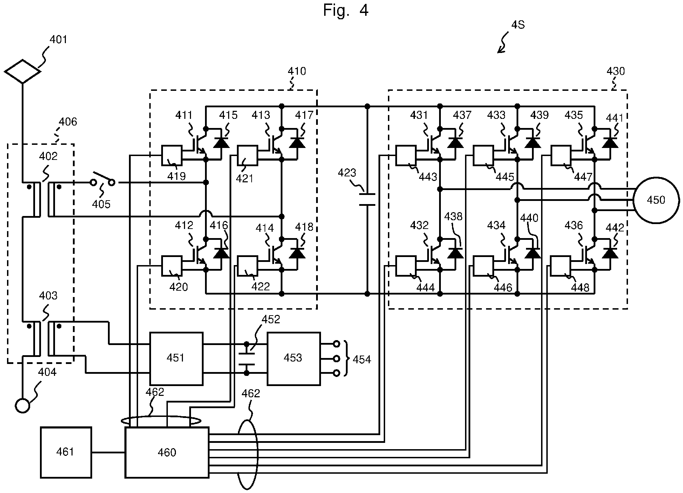

Fig. 4 is a diagram depicting an example of a configuration of a power conversion device of first prior art. The power conversion device 4S depicted in Fig. 4 is a power conversion device for railway vehicles to take AC power and drive a motor.

The power conversion device 4S includes a power collector 401, a primary winding 402 of a traction transformer 406, a secondary winding 403 of the traction transformer 406, wheels 404, a circuit breaker 405, the traction transformer 406, a converter 410, converter IGBTs 411 to 414, converter free wheel diodes 415 to 418, converter gate drivers 419 to 422, a DC smoothing capacitor 423, an inverter 430, inverter IGBTs 431 to 436, inverter free wheel diodes 437 to 442, inverter gate drivers 443 to 448, a motor 450, a rectification circuit 451, a DC smoothing capacitor 452 for auxiliary power supply, an inverter 453 for auxiliary power supply, auxiliary power supply three-phase outputs 454, and a controller 460.

AC power taken from a contact line system such as overhead contact lines via the power collector 401 such as a pantograph is decreased in voltage through the primary winding 402 of the traction transformer 406, passes through the circuit breaker 405, and is supplied to the converter 410. In the converter 410, switching of the converter IGBTs 411 to 414 that are serially driven by the converter gate drivers 419 to 422 is controlled to occur in an appropriate order. Here, the converter gate drivers 419 to 422 are actuated by a command that is output from the controller 460 and transferred through gate control lines 462 according to a driving operation command that is input from a driver via a cab 461.

Then, the converter 410 converts AC power that is input to the converter 410 to DC power and charges the DC smoothing capacitor 423 with the DC power. Meanwhile, an output voltage of the traction transformer 406 is increased by inductance of the traction transformer 406 and the switching operation of the converter 410 and a voltage across the DC smoothing capacitor 423 (this voltage is hereinafter referred to as a DC stage voltage) becomes higher than the output voltage of the traction transformer 406.

Besides, in the inverter 430, switching of the inverter IGBTs 431 to 436 that are sequentially driven by the inverter gate drivers 431 to 436 is controlled to occur in an appropriate order, thereby, the DC power after the conversion is reconverted to three-phase AC power to drive the motor 450. Here, the inverter gate drivers 431 to 436 are actuated by a command that is output from the controller 460 and transferred through gate control lines 462 according to a driving operation command that is input from the driver via the cab 461.

Besides, auxiliary power supply equipment that supplies electric power to interior illumination, air-conditioners, etc. inside railway vehicles (such equipment is hereinafter referred to as an APS (Auxiliary Power Supply System) and is also called an SIV (Static InVerter)) is supplied with electric power from the secondary winding 403 of the traction transformer 406, provided separately from the primary winding 402. After being rectified through the rectification circuit 451, this electric power is converted by the inverter 453 for auxiliary power supply to optional three-phase AC that is supplied to a load such as the above-mentioned air-conditioners. In Fig. 4, the rectification circuit 451, the DC smoothing capacitor 452 for auxiliary power supply, the inverter 453 for auxiliary power supply, and the auxiliary power supply three-phase outputs 454 are included in the APS.

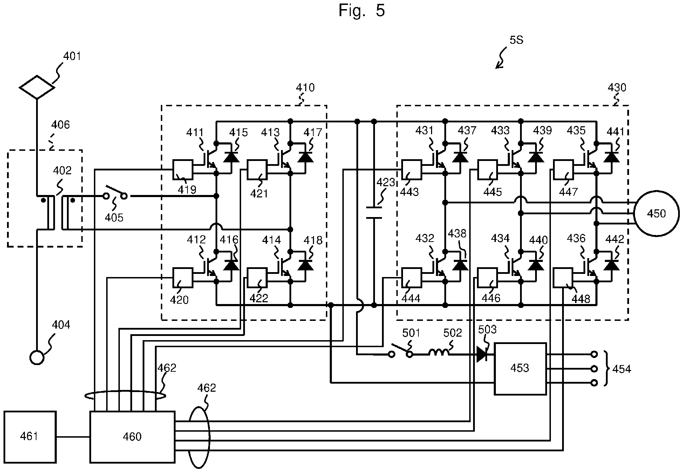

Fig. 5 is a diagram depicting an example of a configuration of a power conversion device of second prior art. The power conversion device 5S depicted in Fig. 4 is also a power conversion device for railway vehicles to take AC power and drive a motor. The power conversion device 5S depicted in Fig. 5 has a circuit breaker 501 for APS, a reactor 502, a backflow preventing diode 503, an inverter 453 for auxiliary power supply, and auxiliary power supply three-phase outputs 454. In Fig. 5, the circuit breaker 501 for APS, the reactor 502, the backflow preventing diode 503, the inverter 453 for auxiliary power supply, and the auxiliary power supply three-phase outputs 454 are included in the APS.

The configuration of the power conversion device 5S is featured in that electric power that is supplied to the inverter 453 for auxiliary power supply is taken from the DC stage; thereby, the secondary winding 403 of the traction transformer 406 and the rectification circuit 451 can be removed in comparison with the power conversion device 4S depicted in Fig. 4.

According to the power conversion device 5S, the rectification circuit 451 only for APS is dispensed with, since the converter 410 is used as the rectification circuit for APS; this is advantageous in enabling system size reduction. This manner is referred to as the APS supplied with DC power and a configuration using this APS supplied with DC power is fundamental in examples of embodiment that will be described below.

<Example 1>

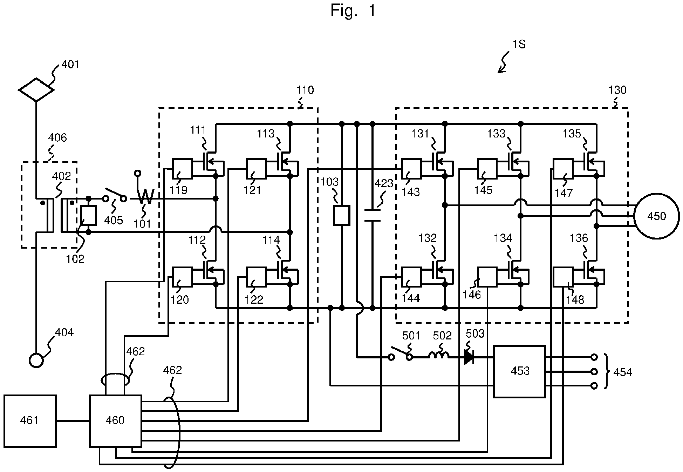

Fig. 1 is a diagram depicting an example of a configuration of a power conversion device of Example 1 of embodiment. In Fig. 1, the same components as those in Fig. 5 are assigned the same reference signs. As depicted in Fig. 1, the power conversion device 1S includes an input current sensor 101, an input voltage sensor 102, a DC voltage sensor 103, a converter 110, converter SiC-MOSFETs 111 to 114, converter gate drivers 119 to 122, an inverter 130, inverter SiC-MOSFETs 131 to 136, inverter gate drivers 143 to 148, a DC smoothing capacitor 423, a motor 450, an inverter 453 for auxiliary power supply, auxiliary power supply three-phase outputs 454, a circuit breaker 501 for APS, a reactor 502, a backflow preventing diode 503, and a controller 460. The SiC-MOSFETs (Metal-Oxide-Semiconductor Field-Effect Transistors) are exemplary power semiconductor elements in which a parasitic diode (body diode) is used as a circulation diode (freewheel diode), dispensing with an external circulation diode.

The present Example is featured as follows: when supplying electric power to the APS while an electric rolling stock equipped with the power conversion device 1S is at a stop and the converter system is inactive, a turn-on signal is input to the gates of the full SiC-MOSFETs through which current is allowed to flow in a reverse direction; by turning the SiC-MOSFETs on, the current flowing through the parasitic diode of each of the SiC-MOSFETs is reduced; and the power conversion device performs a rectification operation, while preventing the SiC-MOSFET elements from deteriorating.

When the rolling stock vehicles are moving, a boost chopper operation is performed by the converter SiC-MOSFETs 111 to 114 and the primary winding 402 of the traction transformer 406 and, thereby, the DC smoothing capacitor 423 is charged at higher voltage than the output voltage Es of the traction transformer 406. Therefore, the DC stage voltage Ecf that is detected by the DC voltage sensor 103 and the output voltage Es that is detected by the input voltage sensor 102 have a magnitude relationship as expressed in Formula (1) below. Because the output voltage Es is sinusoidal waveform, "|Es|" in Formula (1) below represents an absolute value of the amplitude of Es.

[Formula 1]

$$|Es| < Ecf \cdots (1)$$

When the vehicles come to a stop at a station, the controller 460 is notified of the stop of the vehicles from the cab 164 and deactivates the inverter 130 by turning all the inverter SiC-MOSFETs 131 to 136 off. In turn, the controller 460 deactivates the converter 110 by turning all the converter SiC-MOSFETs 111 to 114 off. Then, the controller 460 causes the mode of the converter 110 to make a transition from "converter mode" to "rectification mode". When the vehicles start to move, the controller 460 is notified of moving of the vehicle from the cab 461 and a transition occurs from "rectification mode" to "converter mode". When a mode transition takes place between "converter mode" to "rectification mode", the power conversion device 1S including the converter 110 may be turned off once before the mode transition to ensure safety.

Here, "converter mode" refers to a mode in which AC power is converted to DC power by PWM (Pulse Width Modulation) switching control of the converter SiC-MOSFETs 111 to 114. "Rectification mode" refers to a mode in which AC power is converted to DC power by bridge rectification of the converter SiC-MOSFETs 111 to 114 without exerting switching control of the converter SiC-MOSFETs 111 to 114.

Immediately after the converter 110 is deactivated, Formula (1) above is true and, therefore, a forward voltage is applied to the converter SiC-MOSFETs 111 to 114 that are off and no current flows therethrough.

However, because the supply of electric power to interior equipment such as air-conditioners and illumination continues even when the vehicles are stopped at a station, electric power stored in the DC smoothing capacitor 423 of the DC stage is consumed. As the APS consumes the power stored in the DC smoothing capacitor 423, the DC stage voltage Ecf decreases. Then, when the DC stage voltage Ecf becomes lower than the absolute value |Es| of the amplitude of the output voltage Es, as is expressed in Formula (2), a reverse voltage comes to be applied to the SiC-MOSFETs 111 and 114 and a reverse current comes to flow through the SiC-MOSFETs 111 and 114. Or, when the DC stage voltage Ecf becomes lower than the absolute value |Es| of the amplitude of the output voltage Es, a reverse voltage comes to be applied to the SiC-MOSFETs 112 and 113 and a reverse current comes to flow through the SiC-MOSFETs 112 and 113.

[Formula 2]

$$|Es| > Ecf \cdots (2)$$

Formula (2) above can be rewritten as expressed in Formula (3) blow depending on the positive or negative output voltage Es.

[Formula 3]

$$\begin{cases} |Es| = \phantom{-}Es > Ecf, & if \phantom{x} Es \geqq 0 \\ |Es| = -Es > Ecf, & if \phantom{x} Es < 0 \end{cases} \cdots (3)$$

With the converter being placed in "rectification mode", when Es > Ecf is true if the output voltage Es ≥ 0, as expressed in Formula (3) above, the condition of Formula (2) above is true. Under this situation, the controller 460 in the present Example controls the converter gate drivers 119 to 122 to turn the SiC-MOSFETs 111 and 114 on and turn the SiC-MOSFETs 112 and 113 off and allows a reverse current to flow through the SiC-MOSFETs 111 and 114.

Besides, with the converter being placed in "rectification mode", when -Es > Ecf is true if the output voltage Es < 0, as expressed in Formula (3) above, the condition of Formula (2) above is true. Under this situation, the controller 460 controls the converter gate drivers 119 to 122 to turn the SiC-MOSFETs 112 and 113 on and turn the SiC-MOSFETs 111 and 114 off and allows a reverse current to flow through the SiC-MOSFETs 112 and 113.

With the converter being placed in "rectification mode", only when either of the conditions expressed in Formula (3) above is true, a reverse current is allowed to flow through the SiC-MOSFETs 111 and 114 or the SiC-MOSFETs 112 and 113, as described above. Thereby, control can be exerted so that charging the DC smoothing capacitor 423 will not be performed in a case where the charging is not necessary even when the vehicles are stopped.

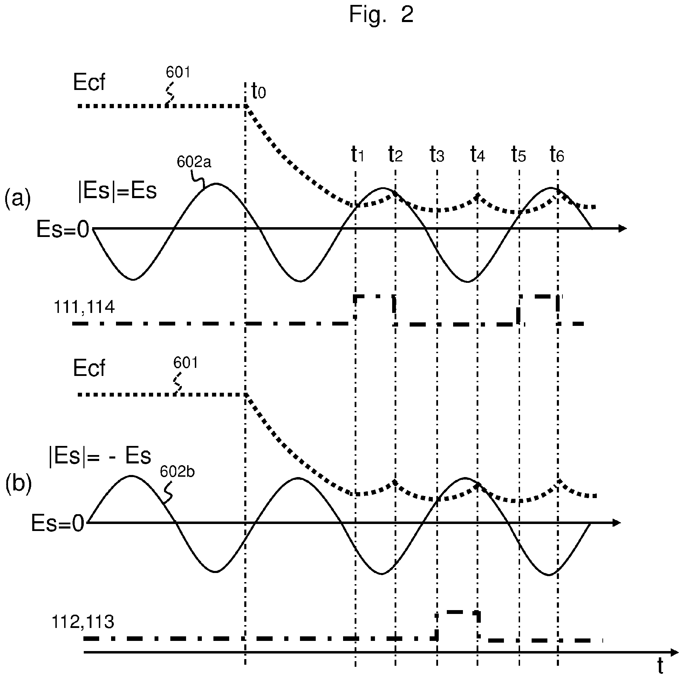

Fig. 2 is a timing chart representing a relationship between changing of Es and Ecf and gate pulses in Example 1. The abscissa of Fig. 2 plots time t and the ordinate plots voltage. Also, in Fig. 2, a label "111, 114" denotes a voltage pulse (gate pulse) that is applied to the gates of the SiC-MOSFETs 111 and 114 and a label "112, 113" denotes a voltage pulse that is applied to the gates of the SiC-MOSFETs 112 and 113. Also, a waveform 602a of |Es| which is presented in Fig. 2(a) is a sinusoidal wave of |Es| = Es, whereas a waveform 602b of |Es| which is presented in Fig. 2(b) is a sinusoidal wave of |Es| = -Es as an inverted waveform 602 with respect to an axis of symmetry Es = 0.

As is indicated by waveforms 601 in Fig. 2(a) and Fig. 2(b), the DC stage voltage Ecf decreases over time from timing $t_0$ at which the vehicles come to a stop and the converter has entered "rectification mode" to timing $t_1$. Then, as can be seen in Fig. 2(a), at timing $t_1$, Es is ≥ 0 and Es becomes higher than Ecf, Es > Ecf; therefore, one of the conditions of Formula (3) above is true. Accordingly, the controller 460 controls the converter gate drivers 119 to 122 to turn the SiC-MOSFETs 111 and 114 on and turn the SiC-MOSFETs 112 and 113 off, as can be seen in Fig. 2(a) and Fig. 2(b).

In this way, AC power from the contact line system collected via the power collector 401 is allowed to flow through the SiC-MOSFETs 111 and 114 and converted to DC power with which the APS is supplied and the DC smoothing capacitor 423 is charged. In response to this, the DC stage voltage Ecf increases for a time from the timing $t_1$ to $t_2$. A state in which one of the conditions of Formula (3) above is true terminates at timing $t_2$ and supplying power to the APS and charging the DC smoothing capacitor 423 by the converter 401 terminate.

Furthermore, as is indicated by the waveforms 601 in Fig. 2(a) and Fig. 2(b), the DC stage voltage Ecf decreases again over time from timing $t_2$ to $t_3$. Then, as can be seen in Fig. 2(b), at timing $t_3$, Es is < 0 and -Es becomes higher than Ecf, -Es > Ecf; therefore, one of the conditions of Formula (3) above is true. Accordingly, the controller 460 controls the converter gate drivers 119 to 122 to turn the SiC-MOSFETs 112 and 113 on and turn the SiC-MOSFETs 111 and 114 off, as can be seen in Fig. 2(a) and Fig. 2(b).

In this way, AC power from the contact line system collected via the power collector 401 is allowed to flow through the SiC-MOSFETs 112 and 113 and converted to DC power with which the APS is supplied and the DC smoothing capacitor 423 is charged. In response to this, the DC stage voltage Ecf increases for a time from the timing $t_3$ to $t_4$. A state in which one of the conditions of Formula (3) above is true terminates at timing $t_4$ and supplying power to the APS and charging the DC smoothing capacitor 423 by the converter 401 terminate.

Furthermore, as is indicated by the waveforms 601 in Fig. 2(a) and Fig. 2(b), the DC stage voltage Ecf decreases again over time from timing $t_4$ to $t_5$. Then, as can be seen in Fig. 2(a), at timing $t_5$, Es is $\geq 0$ and Es becomes higher than Ecf, Es > Ecf; therefore, one of the conditions of Formula (3) above is true. Accordingly, the controller 460 controls the converter gate drivers 119 to 122 to turn the SiC-MOSFETs 111 and 114 on and turn the SiC-MOSFETs 112 and 113 off, as can be seen in Fig. 2(a) and Fig. 2(b).

In this way, AC power from the contact line system collected via the power collector 401 is allowed to flow through the SiC-MOSFETs 111 and 114 and converted to DC power with which the APS is supplied and the DC smoothing capacitor 423 is charged. In response to this, the DC stage voltage Ecf increases for a time from the timing $t_5$ to $t_6$. A state in which the condition of Formula (2) and one of the conditions of Formula (3) above are true terminates at timing $t_6$ and supplying power to the APS and charging the DC smoothing capacitor 423 by the converter 401 terminate.

As described hereinbefore, according to the present Example, the SiC-MOSFETs 111 to 114 can be prevented from deteriorating by conducting current to their parasitic diodes. Also, because the converter can be deactivated when the vehicles are stopped at a station, noise reduction can also be effected. Moreover, because the SiC-MOSFETs can be prevented from deteriorating, there is also an advantage in which system reliability can be improved. Besides, it is possible to realize a power conversion device including a converter that applied SiC-MOSFETs and achieve energy saving of railway vehicles, while achieving it to make the power conversion device smaller and lighter.

<Example 2>

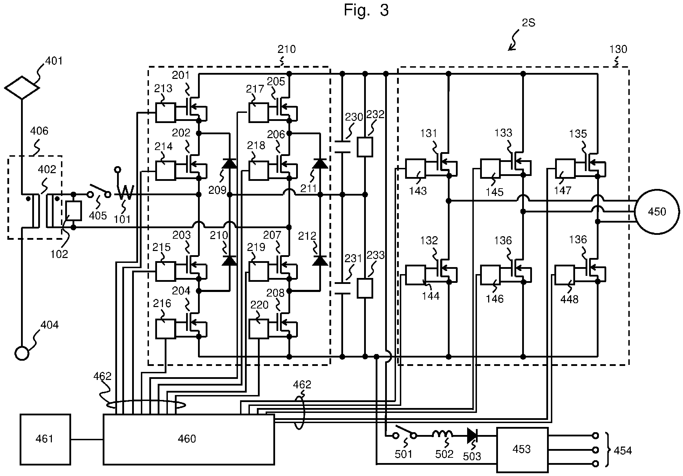

Fig. 3 is a diagram depicting a configuration of a power conversion device of Example 2 of embodiment. In Fig. 3, the same components as those in Fig. 1 and Fig. 5 are assigned the same reference signs.

In Fig. 3, the power conversion device 2S of Example 2 includes a converter 210, converter SiC-MOSFETs 201 to 208, clamp diodes 209 to 212, converter gate drivers 213 to 220, DC smoothing capacitors 230 and 231, and DC voltage sensors 232 and 233. Converter SiC-MOSFETs 201 and 202 are a set of power semiconductor elements forming a pair of arms. Converter SiC-MOSFETs 203 and 204 are also a set of power semiconductor elements forming a pair of arms. Converter SiC-MOSFETs 205 and 206 are also a set of power semiconductor elements forming a pair of arms. Converter SiC-MOSFETs 207 and 208 are also a set of power semiconductor elements forming a pair of arms.

The present Example is featured in that the present invention was applied to a three-level converter. The output voltage Es of the traction transformer 406 is detected by the input voltage sensor 102. Also, the DC stage voltage Ecf is detected by the DC voltage sensors 232 and 233.

As with Example 1, in Example 2, with the converter being placed in "rectification mode", when Es > Ecf is true if the output voltage Es $\geq 0$, as expressed in Formula (3) above, the condition of Formula (2) above is true. Under this situation, by turning the SiC-MOSFETs 201 and 202 and the SiC-MOSFETs 207 and 208 on and turning the SiC-MOSFETs 203 and 204 and the SiC-MOSFETs 205 and 206 off, a reverse current is allowed to flow through the SiC-MOSFETs 201 and 202 and the SiC-MOSFETs 207 and 208. Besides, with the converter being placed in "rectification mode", when -Es > Ecf is true if the output voltage Es < 0, as expressed in Formula (3) above, the condition of Formula (2) above is true. Under this situation, by turning the SiC-MOSFETs 203 and 204 and the SiC-MOSFETs 205 and 206 on and turning the SiC-MOSFETs 201 and 202 and the SiC-MOSFETs 207 and 208 off, a reverse current is allowed to flow through the SiC-MOSFETs 203 and 204 and the SiC-MOSFETs 205 and 206.

Note that the converter may be a multiple-level converter more than three levels.

<Example 3>

The present Example is such that the present invention was applied to a charging current of the DC stage that is generated at startup of the power conversion device 1S or 2S of Example 1 or 2. By way of example, a startup sequence of the power conversion device 1S in Fig. 1 is described below. Before startup of the power conversion device 1S when the vehicles are stopped, the power collector 401 is non-contact with the contact line system and the circuit breaker 405 located at the secondary side of the traction transformer 406 is open. When the startup is initiated by bringing the power collector 401 in contact with the contact line system, the circuit breaker 405 closes and a secondary voltage of the traction transformer 406 is applied to the converter 410. At this time, because the DC stage voltage Ecf is lower than the output voltage Es of the traction transformer 406, the condition of Formula (2) above and one of the conditions of Formula (3) above are true and a reverse current comes to flow through the SiC-MOSFETs.

Therefore, in the present Example, again, at the startup of the power conversion device 1S, by turning appropriate SiC-MOSFETs on depending on the magnitude relationship between the DC stage voltage Ecf and the output voltage Es, as is the case for Example 1, it is possible to restrain the SiC-MOSFETs from conducting current their parasitic diodes and prevent the SiC-MOSFET elements from deteriorating.

Note that, although descriptions have been provided for an example where power semiconductor elements are SiC-MOSFETs in the foregoing Examples, no limitation to this is intended. Those elements may be other wide-gap semiconductor elements having a band gap at or wider than a given value, in which a parasitic diode can be used as a circulation diode, namely, power semiconductor elements using a silicon, gallium nitride, or diamond wafer among others.

Note that the present invention is not limited to Examples of embodiment described hereinbefore and various modifications are included therein. For example, the foregoing Examples are those described in detail to explain the present invention clearly and the invention is not necessarily limited to those including all components described. Besides, a subset of the components of an Example may be replaced by components of another Example and components of another Example may be added to the components of an Example. Besides, for a subset of the components of each Example, other components may be added to the subset or the subset may be removed or replaced by other components, and the subset may be united with another Example or separated and deployed to different Examples. Besides, respective processing steps set forth in an Example may be redeployed or united appropriately based on processing efficiency or implementation efficiency.

List of Reference Signs

1S, 2S, 3S, 4S: power conversion device, 102: input voltage sensor, 110, 210: converter, 111 to 114, 201 to 208: converter SiC-MOSFET, 119 to 122, 213 to 220: converter gate driver, 130: inverter, 131 to 136: inverter SiC-MOSFET, 143 to 148: inverter gate driver, 230, 231, 423: DC smoothing capacitor, 103, 232, 233: DC voltage sensor, 401: power collector, 406: traction transformer, 453: inverter for auxiliary power supply, 450: motor, 460: controller

**Claims**

1. A power conversion device (1S, 2S) for use in an electric rolling stock to convert alternating-current (AC) power taken from a contact line system and decreased in voltage by a transformer (406) to direct-current (DC) power by controlling switching of multiple power semiconductor elements (111-114, 201-208) in which a parasitic diode is used as a circulation diode, the power conversion device (1S, 2S) comprising:

   a control unit (460) to control driving of the multiple power semiconductor elements (111-114, 201-208); and
   a DC stage capacitor (230, 231, 423) connected between a positive DC terminal and a negative DC terminal for output of DC power to which the AC power is converted;

   **characterized in that**:

   the power conversion device (1S, 2S) is operable in a converter mode in which AC power is converted to DC power by pulse width modulation and a rectification mode in which AC power is converted to DC power by bridge rectification; wherein, in the rectification mode the control unit (460) is configured to apply a predetermined voltage pulse causing the power semiconductor elements (111-114, 201-208) to conduct current in a reverse direction for conversion of the AC current to DC current to the power semiconductor elements (111-114, 201-208), without exerting PWM control of the switching; when the power conversion device (1S, 2S) is operated in the rectification mode, the control unit (460) is configured to apply the predetermined voltage pulse to the power semiconductor elements (111-114, 201-208) when the absolute value of the voltage of the AC power from the transformer (406) exceeds the amplitude of the voltage of the DC stage capacitor (230, 231, 423) ; and the power conversion device (1S, 2S) is configured to operate in the rectification mode when the electric rolling stock is at a stop and in the converter mode when the electric rolling stock is moving.

2. The power conversion device (1S, 2S) according to claim 1, wherein:

an auxiliary power supply system is connected between the positive DC terminal and the negative DC terminal; and
the control unit (460) is configured to apply the predetermined voltage pulse to the power semiconductor elements (111-114, 201-208) depending on the state of charging, the state of charging changing depending on how much power is supplied to the auxiliary power supply system from the DC stage capacitor (423, 232, 233).

3. The power conversion device (1S, 2S) according to claim 1 or 2, wherein the mode transition takes place after turning the power conversion device (1S, 2S) off.

4. The power conversion device (1S, 2S) according to any one of claims 1 to 3, wherein:

the multiple power semiconductor elements (111-114, 201-208) comprise a first power semiconductor element (111) and a second power semiconductor element (112) forming a first pair of arms and a third power semiconductor element (113) and a fourth power semiconductor element (114) forming a second pair of arms;
a first connection node between the first power semiconductor element (111) and the second power semiconductor element (112) is connected to an AC terminal for input of the AC power;
a second connection node between the third power semiconductor element (113) and the fourth power semiconductor element (114) is grounded;
a terminal of the first power semiconductor element (111) located above the first connection node is connected to the positive DC terminal and a terminal of the second power semiconductor element (112) located below the first connection node is connected to the negative DC terminal;
a terminal of the third power semiconductor element (113) located above the second connection node is connected to the positive DC terminal and a terminal of the fourth power semiconductor element (114) located below the second connection node is connected to the negative DC terminal; and
when the AC terminal is at a positive potential and the potential of the AC terminal is higher than a potential of the positive DC terminal, the controller (460) is configured to apply the predetermined voltage pulse to the first power semiconductor element (111) and the fourth power semiconductor element (114).

5. The power conversion device (1S, 2S) according to claim 4, wherein when the AC terminal is at a negative potential and an absolute value of the potential of the AC terminal is higher than the potential of the positive DC terminal, the controller is configured to apply the predetermined voltage pulse to the second power semiconductor element (112) and the third power semiconductor element (113).

6. The power conversion device (2S) according to any one of claims 1 to 3, wherein:

the multiple power semiconductor elements (201-208) comprises a set of power semiconductor elements (201, 202) forming a first pair of arms, a set of power semiconductor elements (203, 204) forming a second pair of arms connected in series with the first pair of arms, a set of power semiconductor elements (205, 206) forming a third pair of arms, and a set of power semiconductor elements (207, 208) forming a fourth pair of arms connected in series with the third pair of arms;
a first connection node between the first pair of arms and the second pair of arms is connected to an AC terminal for input of the AC power;
a second connection node between the third pair of arms and the fourth pair of arms is grounded;
a terminal of an uppermost power semiconductor element (201) in the first pair of arms located above the first connection node is connected to the positive DC terminal and a terminal of a lowermost power semiconductor element (204) in the second pair of arms located below the first connection node is connected to the negative DC terminal;
a terminal of an uppermost power semiconductor element (205) in the third pair of arms located above the second connection node is connected to the positive DC terminal and a terminal of a lowermost power semiconductor element (208) in the fourth pair of arms located below the second connection node is connected to the negative DC terminal; and
when the AC terminal is at a positive potential and the potential of the AC terminal is higher than a potential of the positive DC terminal, the controller is configured to apply the predetermined voltage pulse to sets of power semiconductor elements (201, 202, 207, 208) in the first pair of arms and the fourth pair of arms.

**7.** The power conversion device (2S) according to claim 6, wherein when the AC terminal is at a negative potential and an absolute value of the potential of the AC terminal is higher than the potential of the positive DC terminal, the controller is configured to apply the predetermined voltage pulse to sets of power semiconductor elements (203, 204, 205, 206) in the second pair of arms and the third pair of arms.

**8.** The power conversion device (1S, 2S) according to any one of claims 1 to 7, wherein the multiple power semiconductor elements (111-114, 201-208) are wide-gap semiconductor elements having a band gap at or wider than a given value.

**9.** A power conversion method that is performed by a power conversion device (1S, 2S) for use in an electric rolling stock to convert AC power taken from a contact line system and decreased in voltage by a transformer (406) to DC power by controlling switching of multiple power semiconductor elements (111-114, 201-208) in which a parasitic diode is used as a circulation diode, the power conversion device (1S, 2S) comprising:

a control unit (460) to control driving of the multiple power semiconductor elements (111-114, 201-208); and
a DC stage capacitor (230, 231, 423) connected between a positive DC terminal and a negative DC terminal for output of DC power to which the AC power is converted;

**characterized in that**:

the power conversion device (1S, 2S) is operable in a converter mode in which AC power is converted to DC power by PWM and a rectification mode in which AC power is converted to DC power by bridge rectification, wherein, when in the rectification mode, the control unit (460) applies a predetermined voltage pulse causing the power semiconductor elements (111-114, 201-208) to conduct current in a reverse direction for conversion of the AC current to DC current to the power semiconductor elements (111-114, 201-208), without exerting PWM control of the switching;
when the power conversion device (1S, 2S) is operated in the rectification mode, the control unit (460) applies the predetermined voltage pulse to the power semiconductor elements (111-114, 201-208) when the absolute value of the voltage of the AC power from the transformer (406) exceeds the amplitude of the voltage of the DC stage capacitor (230, 231, 423); and
the power conversion device (1S, 2S) is operated in the rectification mode when the electric rolling stock is at a stop and in the converter mode when the electric rolling stock is moving.

**Patentansprüche**

**1.** Leistungsumwandlungsvorrichtung (1S, 2S) zur Verwendung in einem elektrischen Schienenfahrzeug zum Umwandeln von Wechselstrom- (WS-) Leistung, die aus einem Oberleitungssystem entnommen und deren Spannung von einem Transformator (406) verringert wurde, in Gleichstrom- (GS-) Leistung durch Steuern des Schaltens von mehreren Leistungshalbleiterelementen (111-114, 201-208), in denen eine parasitäre Diode als Umlaufdiode verwendet wird, wobei die Leistungsumwandlungsvorrichtung (1S, 2S) Folgendes umfasst:

eine Steuereinheit (460) zum Steuern des Antriebs der mehreren Leistungshalbleiterelemente (111-114, 201-208); und
einen GS-Stufenkondensator (230, 231, 423), der zwischen einen positiven GS-Anschluss und einen negativen GS-Anschluss zur Ausgabe von GS-Leistung, in die die WS-Leistung umgewandelt wird, geschaltet ist;
**dadurch gekennzeichnet, dass**
die Leistungsumwandlungsvorrichtung (1S, 2S) in einem Wandlermodus, in dem WS-Leistung durch Pulsweitenmodulation in GS-Leistung umgewandelt wird, und einem Gleichrichtungsmodus, in dem WS-Leistung durch Brückengleichrichtung in GS-Leistung umgewandelt wird, betreibbar ist; wobei im Gleichrichtungsmodus die Steuereinheit (460) dazu ausgelegt ist, einen vorbestimmten Spannungsimpuls an die Leistungshalbleiterelemente (111-114, 201-208) anzulegen, der bewirkt, dass die Leistungshalbleiterelemente (111-114, 201-208) Strom in eine umgekehrte Richtung leiten, um den WS-Strom in DC-Strom umzuwandeln, ohne eine PWM-Steuerung des Schaltens auszuüben;
wenn die Leistungsumwandlungsvorrichtung (1S, 2S) im Gleichrichtungsmodus betrieben wird, die Steuereinheit (460) dazu ausgelegt ist, den vorbestimmten Spannungsimpuls an die Leistungshalbleiterelemente (111-114, 201-208) anzulegen, wenn der Absolutwert der Spannung der WS-Leistung vom Transformator (406) die Amplitude der Spannung des GS-Stufenkondensators (230, 231, 423) übersteigt; und
die Leistungsumwandlungsvorrichtung (1S, 2S) dazu ausgelegt ist, im Gleichrichtungsmodus zu arbeiten, wenn das elektrische Schienenfahrzeug stillsteht, und im Wandlermodus zu arbeiten, wenn sich das elektrische Schienenfahrzeug bewegt.

**2.** Leistungsumwandlungsvorrichtung (1S, 2S) nach Anspruch 1, wobei:

ein zusätzliches Leistungsversorgungssystem zwischen den positiven GS-Anschluss und den negativen GS-Anschluss geschaltet ist; und die Steuereinheit (460) dazu ausgelegt ist, den vorbestimmten Spannungsimpuls abhängig vom Ladezustand an die Leistungshalbleiterelemente (111-114, 201-208) anzulegen, wobei sich der Ladezustand abhängig davon ändert, wieviel Leistung vom DC-Stufenkondensator (423, 232, 233) zum zusätzlichen Leistungsversorgungssystem zugeführt wird.

**3.** Leistungsumwandlungsvorrichtung (1S, 2S) nach Anspruch 1 oder 2, wobei der Modus-Wechsel nach dem Ausschalten der Leistungsumwandlungsvorrichtung (1S, 2S) erfolgt.

**4.** Leistungsumwandlungsvorrichtung (1S, 2S) nach einem der Ansprüche 1 bis 3, wobei:

die mehreren Leistungshalbleiterelemente (111-114, 201-208) ein erstes Leistungshalbleiterelement (111) und ein zweites Leistungshalbleiterelement (112), die ein erstes Paar von Zweigen ausbilden, und ein drittes Leistungshalbleiterelement (113) und ein viertes Leistungshalbleiterelement (114), die ein zweites Paar von Zweigen ausbilden, umfassen, ein erster Verbindungsknoten zwischen das erste Leistungshalbleiterelement (111) und das zweite Leistungshalbleiterelement (112) mit einem WS-Anschluss zur Eingabe der WS-Leistung geschaltet ist; ein zweiter Verbindungsknoten zwischen dem dritten Leistungshalbleiterelement (113) und dem vierten Leistungshalbleiterelement (114) mit Masse verbunden ist; ein Anschluss des ersten Leistungshalbleiterelements (111), der oberhalb des ersten Verbindungsknotens angeordnet ist, mit dem positiven GS-Anschluss verbunden ist und ein Anschluss des zweiten Leistungshalbleiterelements (112), der unterhalb des ersten Verbindungsknotens angeordnet ist, mit dem negativen GS-Anschluss verbunden ist; ein Anschluss des dritten Leistungshalbleiterelements (113), der oberhalb des zweiten Verbindungsknotens angeordnet ist, mit dem positiven GS-Anschluss verbunden ist und ein Anschluss des vierten Leistungshalbleiterelements (114), der unterhalb des zweiten Verbindungsknotens angeordnet ist, mit dem negativen GS-Anschluss verbunden ist; wenn der WS-Anschluss auf einem positiven Potential liegt und das Potential des WS-Anschlusses größer ist als das Potential des positiven GS-Anschlusses, die Steuerung (460) dazu ausgelegt ist, den vorbestimmten Spannungsimpuls an das erste Leistungshalbleiterelement (111) und das vierte Leistungshalbleiterelement (114) anzulegen.

**5.** Leistungsumwandlungsvorrichtung (1S, 2S) nach Anspruch 4, wobei, wenn der WS-Anschluss auf einem negativen Potential liegt und ein Absolutwert des Potentials des WS-Anschlusses größer ist als das Potential des positiven GS-Anschlusses, die Steuerung dazu ausgelegt ist, den vorbestimmten Spannungsimpuls an das zweite Leistungshalbleiterelement (112) und das dritte Leistungshalbleiterelement (113) anzulegen.

**6.** Leistungsumwandlungsvorrichtung (2S) nach einem der Ansprüche 1 bis 3, wobei:

die mehreren Leistungshalbleiterelemente (201-208) einen Satz von Leistungshalbleiterelementen (201, 202), die ein erstes Paar von Zweigen ausbilden, einen Satz von Leistungshalbleiterelementen (203, 204), die ein, mit dem ersten Paar von Zweigen in Serie geschaltetes, zweites Paar von Zweigen ausbilden, einen Satz von Leistungshalbleiterelementen (205, 206), die ein drittes Paar von Zweigen ausbilden, und einen Satz von Leistungshalbleiterelementen (207, 208), die ein, mit dem dritten Paar von Zweigen in Serie geschaltetes, viertes Paar von Zweigen ausbilden, umfassen; ein erster Verbindungsknoten zwischen dem ersten Paar von Zweigen und dem zweiten Paar von Zweigen mit einem WS-Anschluss zur Eingabe der WS-Leistung verbunden ist; ein zweiter Verbindungsknoten zwischen dem dritten Paar von Zweigen und dem vierten Paar von Zweigen mit Masse verbunden ist; ein Anschluss eines obersten Leistungshalbleiterelements (201) im ersten Paar von Zweigen, der oberhalb des ersten Verbindungsknotens angeordnet ist, mit dem positiven GS-Anschluss verbunden ist und ein Anschluss eines untersten Leistungshalbleiterelements (204) im zweiten Paar von Zweigen, der unterhalb des ersten Verbindungsknotens angeordnet ist, mit dem negativen GS-Anschluss verbunden ist; ein Anschluss eines obersten Leistungshalbleiterelements (205) im dritten Paar von Zweigen, der oberhalb des zweiten Verbindungsknotens angeordnet ist, mit dem positiven GS-Anschluss verbunden ist und ein Anschluss des untersten Leistungshalbleiterelements (208) im vierten Paar von Zweigen, der unterhalb des zweiten Verbindungsknotens angeordnet ist, mit dem negativen GS-Anschluss verbunden ist; und

wenn der WS-Anschluss auf einem positiven Potential liegt und das Potential des WS-Anschlusses größer ist als das Potential des positiven GS-Anschlusses, die Steuerung dazu ausgelegt ist, den vorbestimmten Spannungsimpuls an Sätze von Leistungshalbleiterelementen (201, 202, 207, 208) im ersten Paar von Zweigen und im vierten Paar von Zweigen anzulegen.

7. Leistungsumwandlungsvorrichtung (2S) nach Anspruch 6, wobei, wenn der WS-Anschluss auf einem negativen Potential liegt und ein Absolutwert des Potentials des WS-Anschlusses größer ist als das Potential des positiven GS-Anschlusses, die Steuerung dazu ausgelegt ist, den vorbestimmten Spannungsimpuls an Sätze von Leistungshalbleiterelementen (203, 204, 205, 206) im zweiten Paar von Zweigen und im dritten Paar von Zweigen anzulegen.

8. Leistungsumwandlungsvorrichtung (1S, 2S) nach einem der Ansprüche 1 bis 7, wobei die mehreren Leistungshalbleiterelemente (111-114, 201-208) Halbleiterelemente mit großer Bandlücke mit einer Bandlücke von größer oder gleich einem gegebenen Wert sind.

9. Leistungsumwandlungsverfahren, das von einer Leistungsumwandlungsvorrichtung (1S, 2S) durchgeführt wird, zur Verwendung in einem elektrischen Schienenfahrzeug zum Umwandeln von WS-Leistung, die aus einem Oberleitungssystem entnommen und deren Spannung von einem Transformator (406) verringert wurde, in GS-Leistung durch Steuern des Schaltens von mehreren Leistungshalbleiterelementen (111-114, 201-208), in denen eine parasitäre Diode als Umlaufdiode verwendet wird, wobei die Leistungsumwandlungsvorrichtung (1S, 2S) Folgendes umfasst:

eine Steuereinheit (460) zum Steuern des Antriebs der mehreren Leistungshalbleiterelemente (111-114, 201-208); und
einen GS-Stufenkondensator (230, 231, 423), der zwischen einen positiven GS-Anschluss und einen negativen GS-Anschluss zur Ausgabe von GS-Leistung, in die die WS-Leistung umgewandelt wird, geschaltet ist;
**dadurch gekennzeichnet, dass**
die Leistungsumwandlungsvorrichtung (1S, 2S) in einem Wandlermodus, in dem WS-Leistung durch PWM in GS-Leistung umgewandelt wird, und einem Gleichrichtungsmodus, in dem WS-Leistung durch Brückengleichrichtung in GS-Leistung umgewandelt wird, betreibbar ist; wobei im Gleichrichtungsmodus die Steuereinheit (460) einen vorbestimmten Spannungsimpuls an die Leistungshalbleiterelemente (111-114, 201-208) anlegt, der bewirkt, dass die Leistungshalbleiterelemente (111-114, 201-208) Strom in eine umgekehrte Richtung leiten, um den WS-Strom in DC-Strom umzuwandeln, ohne eine PWM-Steuerung des Schaltens auszuüben;
wenn die Leistungsumwandlungsvorrichtung (1S, 2S) im Gleichrichtungsmodus betrieben wird, die Steuereinheit (460) den vorbestimmten Spannungsimpuls an die Leistungshalbleiterelemente (111-114, 201-208) anlegt, wenn der Absolutwert der Spannung der WS-Leistung vom Transformator (406) die Amplitude der Spannung des GS-Stufenkondensators (230, 231, 423) übersteigt; und
die Leistungsumwandlungsvorrichtung (1S, 2S) im Gleichrichtungsmodus betrieben wird, wenn das elektrische Schienenfahrzeug stillsteht, und im Wandlermodus betrieben wird, wenn sich das elektrische Schienenfahrzeug bewegt.

**Revendications**

1. Dispositif de conversion de puissance (1S, 2S) destiné à être utilisé dans un matériel roulant électrique afin de convertir le courant alternatif (CA) provenant d'une caténaire et à tension réduite par un transformateur (406) en courant continu (CC) en contrôlant le déclenchement de plusieurs éléments d'alimentation à semi-conducteurs (111-114, 201-208) dans lesquels une diode parasite est utilisée comme diode de circulation, le dispositif de conversion de puissance (1S, 2S) comprenant :

une unité de commande (460) destinée à contrôler l'excitation des multiples éléments d'alimentation à semi-conducteurs (111-114, 201-208) ;
et
un condensateur à étage CC (230, 231, 423) relié entre une borne CC positive et une borne CC négative afin de fournir la puissance CC dans laquelle la puissance CA est convertie ;
**caractérisé en ce que** :

le dispositif de conversion de puissance (1S, 2S) peut fonctionner dans un mode de convertisseur dans lequel la puissance CA est convertie en puissance CC par une modulation de durée d'impulsion, et un mode de redressement dans lequel la puissance CA est convertie en puissance CC par pont redresseur ;
dans lequel, dans le mode de redressement, l'unité de commande (460) est configurée pour appliquer une impulsion de tension prédéterminée qui permet aux éléments d'alimentation à semi-conducteurs (111-114, 201-208) de conduire le courant dans une direction inverse pour la conversion du courant CA en courant CC vers les éléments d'alimentation à semi-conducteurs (111-114, 201-208), sans exercer de commande de commutation par modulation de durée d'impulsion ;

lorsque le dispositif de conversion de puissance (1S, 2S) fonctionne en mode de redressement, l'unité de commande (460) est configurée pour appliquer l'impulsion de tension prédéterminée aux éléments d'alimentation à semi-conducteurs (111-114, 201-208) lorsque la valeur absolue de la tension de la puissance CA qui provient du transformateur (406) dépasse l'amplitude de la tension du condensateur à étage CC (230, 231, 423) ; et

le dispositif de conversion de puissance (1S, 2S) est configuré pour fonctionner dans le mode de redressement lorsque le matériel roulant électrique est arrêté, et dans le mode de convertisseur lorsque le matériau roulant électrique se déplace.

2. Dispositif de conversion de puissance (1S, 2S) selon la revendication 1, dans lequel :

un système d'alimentation auxiliaire est relié entre la borne CC positive et la borne CC négative ; et

l'unité de commande (460) est configurée pour appliquer l'impulsion de tension prédéterminée aux éléments d'alimentation à semi-conducteurs (111-114, 201-208) selon l'état de chargement, l'état de chargement changeant selon la quantité de puissance fournie au système d'alimentation auxiliaire par le condensateur à étage CC (423, 232, 233).

3. Dispositif de conversion de puissance (1S, 2S) selon la revendication 1 ou 2, dans lequel le changement de mode a lieu après l'arrêt du dispositif de conversion de puissance (1S, 2S).

4. Dispositif de conversion de puissance (1S, 2S) selon l'une quelconque des revendications 1 à 3, dans lequel :

les multiples éléments d'alimentation à semi-conducteurs (111-114, 201-208) comprennent un premier élément d'alimentation à semi-conducteurs (111) et un deuxième élément d'alimentation à semi-conducteurs (112) qui forment une première paire de bras et un troisième élément d'alimentation à semi-conducteurs (113) et un quatrième élément d'alimentation à semi-conducteurs (114) qui forment une deuxième paire de bras ;

un premier noeud de connexion entre le premier élément d'alimentation à semi-conducteurs (111) et le deuxième élément d'alimentation à semi-conducteurs (112) est relié à une borne CA destinée à l'entrée de la puissance CA ;

un deuxième noeud de connexion entre le troisième élément d'alimentation à semi-conducteurs (113) et le quatrième élément d'alimentation à semi-conducteurs (114) est mis à la terre ;

une borne du premier élément d'alimentation à semi-conducteurs (111) qui se trouve au-dessus du premier noeud de connexion est reliée à la borne CC positive et une borne du deuxième élément d'alimentation à semi-conducteurs (112) qui sr trouve sous le premier noeud de connexion est reliée à la borne CC négative ;

une borne du troisième élément d'alimentation à semi-conducteurs (113) qui se trouve au-dessus du deuxième noeud de connexion est reliée à la borne CC positive et une borne du quatrième élément d'alimentation à semi-conducteurs (114) qui se trouve sous le deuxième noeud de connexion est reliée à la borne CC négative ; et

lorsque la borne CA se trouve à un potentiel positif et le potentiel de la borne CA est supérieur à un potentiel de la borne CC positive, le contrôleur (460) est configuré pour appliquer l'impulsion de tension prédéterminée au premier élément d'alimentation à semi-conducteurs (111) et au quatrième élément d'alimentation à semi-conducteurs (114).

5. Dispositif de conversion de puissance (1S, 2S) selon la revendication 4, dans lequel, lorsque la borne CA se trouve à un potentiel négatif et une valeur absolue du potentiel de la borne CA est supérieure au potentiel de la borne CC positive, le contrôleur est configuré pour appliquer l'impulsion de tension prédéterminée au deuxième élément d'alimentation à semi-conducteurs (112) et au troisième élément d'alimentation à semi-conducteurs (113).

6. Dispositif de conversion de puissance (1S, 2S) selon l'une quelconque des revendications 1 à 3, dans lequel :

les multiples éléments d'alimentation à semi-conducteurs (201-208) comprennent un groupe d'éléments d'alimentation à semi-conducteurs (201, 202) qui forment une première paire de bras, un groupe d'éléments d'alimentation à semi-conducteurs (203, 204) qui forment une deuxième paire de bras reliés en série à la première paire de bras, un groupe d'éléments d'alimentation à semi-conducteurs (205, 206) qui forment une troisième paire de bras, et un groupe d'éléments d'alimentation à semi-conducteurs (207, 208) qui forment une quatrième paire de bras reliés en série à la troisième paire de bras ;

un premier noeud de connexion entre la première paire de bras et le deuxième paire de bras est relié à une borne CA destinée à l'entrée de la puissance CA ;

un deuxième noeud de connexion entre la troisième paire de bras et la quatrième paire de bras est mis à la terre ;

une borne d'un élément d'alimentation à semi-conducteurs le plus élevé (201) de la première paire de bras qui se trouve au-dessus du premier noeud de connexion est reliée à la borne CC positive et une borne d'un élément d'alimentation à semi-conducteurs le moins élevé (204) de la deuxième paire de bras qui se trouve sous le premier noeud de connexion est reliée à la borne CC négative ;

une borne d'un élément d'alimentation à semi-conducteurs le pus élevé (205) de la troisième paire de bras qui se trouve au-dessus du deuxième noeud de connexion est reliée à la borne CC positive et une borne d'un élément d'alimentation à semi-conducteurs le moins élevé (208) de la quatrième paire de bras qui se trouve sous le deuxième noeud de connexion est reliée à la borne CC négative ;

et

lorsque la borne CA se trouve à un potentiel positif et le potentiel de la borne CA est supérieur à un potentiel de la borne CC positive, le contrôleur est configuré pour appliquer l'impulsion de tension prédéterminée aux groupes d'éléments d'alimentation à semi-conducteurs (201, 202, 207, 208) de la première paire de bras et de la quatrième paire de bras.

7. Dispositif de conversion de puissance (2S) selon la revendication 6, dans lequel, lorsque la borne CA se trouve à un potentiel négatif et une valeur absolue du potentiel de la borne CA est supérieure au potentiel de la borne CC positive, le contrôleur est configuré pour appliquer l'impulsion de tension prédéterminée aux groupes d'éléments d'alimentation à semi-conducteurs (203, 204, 205, 206) de la deuxième paire de bras et de la troisième paire de bras.

8. Dispositif de conversion de puissance (1S, 2S) selon l'une quelconque des revendications 1 à 7, dans lequel les multiples éléments d'alimentation à semi-conducteurs (111-114, 201-208) sont des éléments à semi-conducteurs à espacement large qui présentent une largeur de bande égale ou supérieure à une valeur donnée.

9. Procédé de conversion de puissance exécuté par un dispositif de conversion de puissance (1S, 2S) destiné à être utilisé dans un matériel roulant électrique afin de convertir la puissance CA provenant d'une caténaire et à tension réduite par un transformateur (406) en puissance CC en contrôlant le déclenchement de plusieurs éléments d'alimentation à semi-conducteurs (111-114, 201-208) dans lesquels une diode parasite est utilisée comme diode de circulation, le dispositif de conversion de puissance (1S, 2S) comprenant :

une unité de commande (460) destinée à contrôler l'excitation des multiples éléments d'alimentation à semi-conducteurs (111-114, 201-208) ;
et

un condensateur à étage CC (230, 231, 423) relié entre une borne CC positive et une borne CC négative afin de fournir la puissance CC dans laquelle la puissance CA est convertie ;
**caractérisé en ce que** :

le dispositif de conversion de puissance (1S, 2S) peut fonctionner dans un mode de convertisseur dans lequel la puissance CA est convertie en puissance CC par une modulation de durée d'impulsion, et un mode de redressement dans lequel la puissance CA est convertie en puissance CC par pont redresseur, dans lequel, dans le mode de redressement, l'unité de commande (460) applique une impulsion de tension prédéterminée qui permet aux éléments d'alimentation à semi-conducteurs (111-114, 201-208) de conduire le courant dans une direction inverse pour la conversion du courant CA en courant CC vers les éléments d'alimentation à semi-conducteurs (111-114, 201-208), sans exercer de commande de commutation par modulation de durée d'impulsion ;

lorsque le dispositif de conversion de puissance (1S, 2S) fonctionne en mode de redressement, l'unité de commande (460) est configurée pour appliquer l'impulsion de tension prédéterminée aux éléments d'alimentation à semi-conducteurs (111-114, 201-208) lorsque la valeur absolue de la tension de la puissance CA qui provient du transformateur (406) dépasse l'amplitude de la tension du condensateur à étage CC (230, 231, 423) ; et

le dispositif de conversion de puissance (1S, 2S) est configuré pour fonctionner dans le mode de redressement lorsque le matériel roulant électrique est arrêté, et dans le mode de convertisseur lorsque le matériau roulant électrique se déplace.

Fig. 1

Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011036020 A
- US 2013063067 A
- US 2018123474 A
- JP 2014064398 A